Europäisches Patentamt

European Patent Office

Office européen des brevets

(11) Numéro de publication: **0 375 518**
**A1**

## (12) DEMANDE DE BREVET EUROPEEN

(21) Numéro de dépôt: 89403484.2

(22) Date de dépôt: 14.12.89

(51) Int. Cl.5 **C04B 35/49, H01G 4/12**

(30) Priorité: 23.12.88 FR 8817081

(43) Date de publication de la demande:
27.06.90 Bulletin 90/26

(84) Etats contractants désignés:
DE FR GB NL

(71) Demandeur: COMPAGNIE EUROPEENNE DE
COMPOSANTS ELECTRONIQUES LCC
50, rue Jean-Pierre Timbaud
F-92400 Courbevoie(FR)

(72) Inventeur: Bauger, Alain
THOMSON-CSF SCPI Cédex 67
F-92045 Paris la Défense(FR)
Inventeur: Laurent, Michel
THOMSON-CSF SCPI Cédex 67
F-92045 Paris la Défense(FR)

(74) Mandataire: Guérin, Michel et al
THOMSON-CSF SCPI
F-92045 PARIS LA DEFENSE CEDEX 67(FR)

(54) **Composition céramique diélectrique à haute permittivité et à stabilité élevée, et condensateur l'utilisant.**

(57) La composition étant élaborée à partir d'un mélange comprenant en poids 59 à 67 % de carbonate de baryum, 22 à 26 % d'oxyde de titane, 2 à 6 % de carbonate de calcium, 0 à 1,1 % de carbonate de strontium, 3 à 12 % d'oxyde de zirconium, le mélange comprenant également entre 0,04 et 0,9 % en poids d'adjuvants, ces adjuvants comprenant au moins un composé choisi par les oxydes de cérium, de néodyme, de lanthane, de tungstène, de molybdène, de tantale et de niobium, et au moins un composé choisi parmi les oxydes de manganèse de chrome, de cobalt, de zinc et de cuivre.

Application à la fabrication de condensateurs céramique.

EP 0 375 518 A1

## COMPOSITION CERAMIQUE DIELECTRIQUE A HAUTE PERMITTIVITE ET A STABILITE ELEVEE, ET CONDENSATEUR L'UTILISANT

La présente invention concerne des compositions céramiques à haute permittivité et plus particulièrement des compositions céramiques de la classe Z5U ou Y5V utilisées comme matériau diélectrique pour des condensateurs céramiques de type disque ou de type multicouche.

Il est bien connu que la stabilité des matériaux diélectriques à base de titanate de baryum, frittés en atmosphère pauvre en oxygène est très dépendante de l'aptitude à la réduction du titane, de la valence quatre à la valence trois. Afin d'éviter la semi-conduction des céramiques, il suffit de substituer partiellement le titane par des éléments dont la valence peut varier entre des valeurs extrêmes (de quatre à deux), en fonction du taux de lacunes d'oxygène formées dans le réseau cristallin. Ces éléments sont choisis parmi les cations suivants : manganèse, chrome, cobalt, etc...

Cependant l'introduction de ces cations en site titane ne permet pas d'assurer une stabilité suffisante au diélectrique lors du fonctionnement du condensateur sous champ élevé (2 à 3 volts par micromètre), et la chute de la résistance d'isolement du matériau céramique conduit progressivement à une destruction du composant.

Pour pallier ces inconvénients, l'invention propose que la substitution du titane (à la valence quatre) par des cations de valence variable (quatre et trois), soit effectuée conjointement à l'addition d'éléments jouant le rôle de donneur et d'accepteur pour la structure pérovskite. Ceci permet une augmentation considérable de la stabilité dans le temps des condensateurs céramiques soumis à un champ de 2 volts par micromètre, et à une température de 280° C.

L'originalité de la présente invention réside en ce que le matériau diélectrique après frittage en présence d'atmosphère très faiblement chargée en oxygène, présente une stabilité tout à fait remarquable lorsqu'il est soumis aux tests de vieillissement à haute température (280° C) et sous champ (2 à 3 volts par micromètre). L'avantage considérable de ces compositions est de permettre la fabrication de condensateurs multicouches à électrodes internes en métaux non précieux, lesdits métaux étant choisis parmi les éléments tels que le nickel, le cobalt ou leurs alliages.

L'invention a donc pour objet une composition céramique à haute permittivité, la composition étant à base de titanate de baryum, caractérisée en ce qu'elle est élaborée à partir d'un mélange comprenant en poids 59 à 67 % de carbonate de baryum, 22 à 26 % d'oxyde de titane, 2 à 6 % de carbonate de calcium, 0 à 1,1 % de carbonate de strontium, 3 à 12 % d'oxyde de zirconium, le mélange comprenant également entre 0,04 et 0,9 % en poids d'adjuvants, ces adjuvants comprenant au moins un composé choisi parmi les oxydes de cérium, de néodyme, de lanthane, de tungstène, de molybdène, de tantale et de niobium, et au moins un composé choisi parmi les oxydes de manganèse, de chrome, de cobalt, de zinc et de cuivre.

L'invention a aussi pour objet un condensateur électrique comportant au moins une couche diélectrique et au moins deux électrodes, caractérisé en ce que la couche diélectrique est constituée par une composition telle que définie ci-dessus.

L'invention sera mieux comprise et d'autres avantages apparaîtront grâce à la description qui va suivre, donnée à titre d'exemple non limitatif.

La composition céramique diélectrique selon l'invention est constituée par une phase principale choisie dans le diagramme $BaCO_3$ - $CaCO_3$ - $SrCO_3$ - $TiO_2$ - $ZrO_2$ qui est exprimée par la formule générale $Ba_{1-x-y}$ $Ca_x$ $Sr_y$ $Ti_{1-z}$ $Zr_z O_3$.

A cette phase principale sont ajoutés des adjuvants permettant la stabilisation des propriétés électriques.

Ces derniers sont constitués par des oxydes de manganèse, de chrome, de zinc, de cobalt ou de cuivre ainsi que des éléments tels que les oxydes de lanthane, de tungstène, de molybdène, de tantale, ou de niobium, de cérium, de néodyme.

Selon un mode de réalisation préférentiel, le diélectrique est constitué par une chamotte complexe de formule générale $Ba_{1-x-y}$ $Ca_x$ $Sr_y$ $Ti_{1-z}$ $Zr_z O_3$ (ou x varie de 0,06 à 0,15, y de 0 à 0,02 et z de 0,08 à 0,25) à raison de 99 à 99,8 % en poids et d'adjuvants à raison de 0,2 à 1 % en poids. La chamotte complexe est donc réalisée par mélange des éléments suivants (en poids) :
$BaCO_3$(59 à 67 %) $CaCO_3$ (2 à 6 %) $SrCO_3$ (0 à 1,1 %) $TiO_2$ (22 à 26 %) $ZrO_2$ (3 à 12 %) .

La synthèse thermique est effectuée à des températures comprises entre 1050° C et 1200° C pendant deux heures en atmosphère oxydante. A cette chamotte contenant Ba, Sr, Ca, Ti et Zr on additionne les éléments dopants sélectionnés parmi la série des oxydes précédemment cités à savoir :
$Mn_3O_4$ (0,02 à 0,3 % ), $Cr_2O_3$ (0,02 à 0,3 % ), CuO (0 à 0,5 %), ZnO (0 à 0,5 %), $CeO_2$ (0,02 à 0,3 %), $Nd_2O_3$ (0,02 à 0,3 %), $La_2O_3$ (0 à 0,3 %), $WO_3$ (0,02 à 0,3 %), $MoO_3$ (0,02 à 0,3 %), $Ta_2O_5$ (0,02 à 0,3

%), $Co_3O_4$ (0,02 à 0,4 %), $Nb_2O_5$ (0,02 à 0,3 %), proportions données en poids.

Selon un autre mode de réalisation préférentiel, le diélectrique est constitué par une chamotte complexe de formule générale :

$Ba_{1-x-y-u} Ca_x Sr_y X_u Ti_{1-z-v} Zr_z Z_v O_3$ où x varie de 0,06 à 0,15, y varie de 0 à 0,02, u varie de 0,001 à 0,006, z varie de 0,08 à 0,25, v varie de 0,001 à 0,004.

X : représente les éléments cérium, néodyme, lanthane,

Z : représente les éléments manganèse, chrome, cobalt, zinc, tungstène, molybdène, tantale, niobium, cuivre.

La chamotte complexe est donc réalisée par mélange des composés suivants :

Ba $CO_3$ (59 à 67 %), $SrCO_3$ (0 à 1,1 %), $CaCO_3$(2 à 6 %), $TiO_2$ (22 à 26 %), $ZrO_2$ (3 à 12 % ),

X sous forme d'oxyde (0 à 0,3 % ) et Z sous forme d'oxyde (0 à 0,5 %), proportions données en poids.

La synthèse thermique est effectuée à des températures comprises entre 1050°C et 1200°C pendant deux heures en atmosphère oxydante.

Les compositions diélectriques sont préparées suivant la méthode bien connue de l'homme de l'art par pesée et mélange des matières premières afin d'obtenir une mixture suffisamment homogène pour permettre une réaction complète des éléments entre eux lors du chamottage et du frittage.

La poudre est pressée sous forme de disques par l'intermédiaire d'un liant, et le frittage est effectué dans un four étanche afin de contrôler très précisément la pression partielle en oxygène.

L'équilibre $H_2 H_2O$, ou $CO CO_2$ permet d'obtenir les pressions partielles d'oxygène requises dans un gaz vecteur neutre à la température de palier (l'azote par exemple) :

Les températures de frittage sont comprises entre 1300°C et 1380°C et les temps de palier varient entre 30 minutes et deux heures.

Les condensateurs multicouches peuvent être par contre obtenus par la méthode bien connue de coulage, et les électrodes internes en métaux non précieux (nickel par exemple) sont sérigraphiées à la surface des feuilles de céramique. L'ensemble est fritté dans les conditions décrites précédemment.

Ainsi les compositions selon l'invention comprennent au moins un élément accepteur d'électrons (tel le manganèse, le chrome, le cobalt, le zinc et le cuivre) et au moins un élément donneur d'électrons (tel le cérium, le néodyme, le lanthane, le tungstène, le molybdène, le tantale et le niobium).

Afin d'apprécier les avantages apportés par les compositions selon l'invention, le tableau I, placé en fin de description, regroupe les caractéristiques électriques de compositions céramiques constituées par une phase principale choisie dans le même diagramme que celui de la composition selon l'invention, mais dont les adjuvants sont constitués uniquement par des oxydes d'éléments accepteurs d'électrons. Pour ces compositions, les proportions des principaux constituants sont fixés de manière à obtenir une solution solide dont les rapports de stoechiométrie sont les suivants :

$TiO_2/BaO = 0,932$, $BaO/CaO = 7,47$ et $ZrO_2/CaO = 1,5$.

Dans le tableau I, les pourcentages d'adjuvants sont indiqués en poids. Pour·les produits 1, 2 et 3, le pourcentage d'adjuvant représente donc 0,15 % de la masse totale, la phase principale représentant 99,85 % de la masse totale et comprenant 63,57 % de $BaCO_3$, 24 % de $TiO_2$, 4,31 % de $CaCO_3$ et 7,97 % de $ZrO_2$. Dans ce tableau, on a également mentionné la permittivité $\epsilon$ et la densité d de la composition, la capacité C à 20°C du condensateur (diamètre 7 mm et épaisseur 0,69 mm) réalisé à partir de cette composition, ses pertes tg $\delta$, la variation relative de capacité $\Delta C/C$ pour des températures de +10°C et +85°C, sa stabilité dans le temps. La capacité et les pertes diélectriques sont mesurées à 1kHz, sous une tension de 1 volt.

La stabilité dans le temps des condensateurs est estimée en fonction d'essais de dégradation. Les condensateurs à tester sont portés à 280°C et sont soumis à des champs électriques représentant 2 à 3 V/μ. La mesure de la conductivité de la céramique est effectuée par l'intermédiaire d'une résistance placée en série avec le condensateur à tester. On contrôle ainsi la tension aux bornes de la résistance et la valeur maximale permise doit être inférieure à 100 mV tout au long de l'essai de vieillissement.

La stabilité des pièces pendant 5 jours dans ces conditions permet d'affirmer que celles-ci subiraient sans problème les tests de vieillissement normalisés (2 000 heures -125°C - 2 fois la tension nominale).

Pour les produits 1, 2 et 3 du tableau I, on constate une dégradation très rapide des céramiques dans les conditions des essais (280°C et 2 V/μ).

Les exemples qui vont suivre porteront sur des céramiques selon l'invention et sur les condensateurs réalisés à partir de ces céramiques.

EXEMPLE 1

On réalise une composition diélectrique par mélange des carbonates de baryum et de calcium, avec les oxydes de titane et de zirconium, ainsi que les oxydes de manganèse, de lanthane et de tungstène. Les proportions des principaux constituants sont fixées de manière à obtenir une solution solide dont les rapports de stoechiométrie sont les suivants. :

$TiO_2$·$BaO$ = 0,932, $ZrO_2$·$CaO$ = 1,5, $BaO$·$CaO$ = 7,47.

Les éléments de la composition sont mélangés en milieu aqueux. Le broyage est effectué dans un système de type attritor pendant une heure, avec les proportions suivantes : 50 % en poids de billes de zircone, 29 % en poids d'eau, et 21 % en poids d'oxydes.

La barbotine est séchée et la poudre calcinée à des températures comprises entre 1050°C et 1200°C et plus particulièrement à 1150°C pendant deux heures.

Les compositions retenues comprennent :

63,456 % en poids de $BaCO_3$

23,96 % en poids de $TiO_2$

4,305 % en poids de $CaCO_3$

7,94 % en poids de $ZrO_2$

0,043 à 0,052 % en poids de $La_2O_3$

0,116 à 0,124 % en poids de $WO_3$

0,171 à 0,1715 % en poids de $Mn_3O_4$

La poudre ainsi obtenue et pressée sous forme de disques d'épaisseur 1 mm et de diamètre 8 mm. Le frittage est effectué dans un four électrique à des températures comprises entre 1280°C et 1380°C et plus particulièrement 1350°C, en présence d'une atmosphère pauvre en oxygène. La pression partielle en oxygène est contrôlée par l'équilibre $H_2/H_2O$, et est fixée à des valeurs comprises entre $10^{-7}$ et $10^{-11}$ atmosphère, et plus particulièrement $10^{-8}$ atmosphère. Après dépôt des électrodes en argent, les disques sont mesurés en capacité et pertes diélectriques à la température de 20°C et sous une tension de 1 à volt 1 $kH_z$. Les résultats sont présentés dans le tableau II placé en fin de description.

Il est à remarquer que ces compositions peuvent être frittées à des pressions partielles en oxygène de $10^{-11}$ atmosphère (à 1350°C) ce qui correspond à un milieu très réducteur où les métaux non nobles (nickel par exemple) ne s'oxydent pas.

Ces diélectriques sont stables indéfiniment dans des conditions très sévères de vieillissement accéléré (280°C - 2 volts par micromètre).

## EXEMPLE II

On prépare dans les mêmes conditions que précédemment des mélanges en fixant les rapports de stoechiométrie des phases principales aux valeurs suivantes :

$TiO_2/BaO$ = 0,932, $ZrO_2/CaO$ = 1,5, $BaO/CaO$ = 7,47.

Les compositions retenues sont les suivantes (proportions données en poids) :

63,456 % de $BaCO_3$

23,96 % de $TiO_2$

4,305 % de $CaCO_3$

7,94 % de $ZrO_2$

0,039 à 0,054 % de $Nd_2O_3$

0,113 à 0,128 % de $WO_3$

0,172 % de $Mn_3O_4$.

Les résultats électriques sont exposés au tableau III placé en fin de description.

La stabilité dans le temps de ces compositions est comparable à celle observée pour l'exemple 1.

## EXEMPLE III

On prépare dans les mêmes conditions que précédemment des mélanges en fixant les rapports de stoechiométrie des phases principales aux valeurs suivantes :

$TiO_2/BaO$ = 0,932, $ZrO_2/CaO$ = 1,5, $BaO/CaO$ = 7,47.

Les compositions retenues sont les suivantes (proportions données en poids) :

63,456 % de $BaCO_3$

23,96 % de $TiO_2$

4,305 % de $CaCO_3$

7,94 % de $ZrO_2$
0,172 % de $Mn_3O_4$
0,037 à 0,0806 % de $La_2O_3$
0,087 à 0,13 % de $MoO_3$.

Les résultats électriques sont exposés au tableau IV placé en fin de description.
La stabilité dans le temps est également très satisfaisante.

EXEMPLE IV

On prépare dans les mêmes conditions que précédemment des mélanges en fixant les rapports de stoechiométrie des phases principales aux valeurs suivantes :
$TiO_2$ BaO = 0,932, $ZrO_2$/CaO = 1,5, BaO/CaO = 7,47.
Les compositions retenues sont les suivantes (proportions données en poids) :
63,456 % de $BaCO_3$
23,96 % de $TiO_2$
4,305 % de $CaCO_3$
7,94 % de $ZrO_2$
0,172 % de $Mn_3O_4$
0,1085 à 0,1443 % de $MoO_3$
0,023 à 0,0585 % de ZnO

Les résultats électriques sont exposés au tableau V placé en fin de description.
La stabilité dans le temps est conforme à celle des essais précédents.

EXEMPLE V

On prépare dans les mêmes conditions que précédemment des mélanges en fixant les rapports de stoechiométrie des phases principales aux valeurs suivantes :
$TiO_2$/BaO = 0,932, $ZrO_2$/CaO = 1,5, BaO/CaO = 7,47.
Les compositions retenues sont les suivantes (proportions données en poids)
63,246 à 63,34 % de $BaCO_3$
23,88 à 23,92 % de $TiO_2$
4,29 à 4,297 % de $CaCO_3$
7,91 à 7,925 % de $ZrO_2$
0,151 à 0,3025 % de $Co_3O_4$
0,2 % de $CeO_2$
0,0434 à 0,0445 % de $La_2O_3$
0,123 à 0,1236 % de $WO_3$

Les résultats électriques sont exposés au tableau VI placé en fin de description.
La stabilité dans le temps est conforme à celle des essais précédents.

EXEMPLE VI

On prépare dans les mêmes conditions que précédemment des mélanges en fixant les rapports de stoechiométrie des phases principales aux valeurs suivantes :
$TiO_2$/BaO = 0,932, $ZrO_2$/CaO = 1,5, BaO/CaO = 7,47.
Les compositions retenues sont les suivantes (proportions données en poids) :
63,34 % de $BaCO_3$
23,92 % de $TiO_2$
4,297 % de $CaCO_3$
7,924 à 7,925 % de $ZrO_2$
0,152 % de $Cr_2O_3$
0,2 % de $CeO_2$
0,043 à 0,0514 % de $La_2O_3$
0,1156 à 0,123 % de $WO_3$

Les résultats électriques sont exposés au tableau VII placé en fin de description.

La stabilité dans le temps de ces compositions est conforme à celle des essais précédents.

## EXEMPLE VII

On réalise dans les mêmes conditions que précédemment des mélanges en fixant les rapports de stoechiométrie des phases principales aux valeurs suivantes :

$TiO_2/BaO$ = 0,932, $ZrO_2$ CaO = 1,5, BaO/CaO = 7,47.

Les compositions retenues sont les suivantes (proportions données en poids) :

63,44 à 63,47 % de $BaCO_3$

23,95 à 23,97 % de $TiO_2$

7,93 à 7,94 % de $ZrO_2$

4,3 à 4,305 % de $CaCO_3$

0,172 % de $Mn_3O_4$

0,04 à 0,128 % de $Nb_2O_5$

0,028 à 0,156 % de $CeO_2$

Les résultats électriques sont exposés au tableau VIII placé en fin de description.

La stabilité dans le temps de ces compositions est conforme à celle des essais précédents.

## EXEMPLE VIII

On réalise dans les mêmes conditions que précédemment des mélanges en fixant les rapports de stoechiométrie des phases principales aux valeurs suivantes :

$TiO_2/BaO$ = 0,932, $ZrO_2/CaO$ = 1,5, BaO/CaO = 7,47.

Les compositions retenues sont les suivantes (proportions données en poids) :

63,44 à 63,47 % de $BaCO_3$

23,95 à 23,97 % de $TiO_2$

7,94 % de $ZrO_2$

4,303 à 4,305 % de $CaCO_3$

0,172 % de $Mn_3O_4$

0,04 à 0,128 % de $Nb_2O_5$

0,027 à 0,15 % de $Nd_2O_3$

Les résultats électriques sont exposés au tableau IX placé en fin de description.

La stabilité dans le temps de ces compositions est conforme à celle des essais précédents.

## EXEMPLE IX

On réalise dans les mêmes conditions que précédemment des mélanges en fixant les rapports de stoechiométrie des phases principales aux valeurs suivantes :

$TiO_2/BaO$ = 0,932, $ZrO_2/CaO$ = 1,5, BaO/CaO = 7,47.

Les compositions retenues sont les suivantes (proportions données en poids) :

63,46 à 63,47 % de $BaCO_3$

23,96 % de $TiO_2$

7,94 % de $ZrO_2$

4,305 % de $CaCO_3$

0,171 à 0,172 % de $Mn_3O_4$

0,128 % de $Ta_2O_5$

0 à 0,036 % de ZnO

0 à 0,025 de $La_2O_3$.

Les résultats électriques sont exposés au tableau X placé en fin de description.

La stabilité dans le temps de ces compositions est conforme à celle des essais précédents.

## EXEMPLE X

On réalise dans les mêmes conditions que précédemment des mélanges en fixant les rapports de stoechiométrie des phases principales aux valeurs suivantes :

$TiO_2$ $BaO$ = 0,932, $ZrO_2$/$CaO$ = 1,7, $BaO$/$CaO$ = 7,47.

Les compositions retenues sont les suivantes (proportions données en poids) :

62,78 à 62,85 % de $BaCO_3$

23,7 à 23,73 % de $TiO_2$

8,91 à 8,92 % de $ZrO_2$

4,26 à 4,263 % de $CaCO_3$

0,075 à 0,17 % de $Mn_3O_4$

0,054 % de $Nd_2O_3$

0,112 % de $WO_3$.

Les résultats électriques sont exposés au tableau XI placé en fin de description.

La stabilité dans le temps de ces compositions est conforme à celle des essais précédents.

EXEMPLE XI

On réalise dans les mêmes conditions que précédemment des mélanges en fixant les rapports de stoechiométrie des phases principales aux valeurs suivantes :

$TiO_2$ $BaO$ = 0,932, $ZrO_2$/$CaO$ = 1,7, $BaO$/$CaO$ = 7,47.

Les compositions retenues sont les suivantes (proportions données en poids) :

62,16 % de $BaCO_3$

23,47 % de $TiO_2$

4,217 % de $CaCO_3$

8,825 % de $ZrO_2$

0,997 % de $SrCO_3$

0,168 % de $Mn_3O_4$

0,05 % de $La_2O_3$

0,113 % de $WO_3$.

Les résultats électriques sont exposés au tableau XII placé en fin de description.

La stabilité dans le temps de ces compositions est conforme à celle des essais précédents.

EXEMPLE XII

On réalise dans les mêmes conditions que précédemment des mélanges en fixant les rapports de stoechiométrie des phases principales aux valeurs suivantes :

$TiO_2$/$BaO$ = 0,932, $ZrO_2$/$CaO$ = 1,5, $BaO$/$CaO$ = 7,47.

Les compositions retenues sont les suivantes (proportions données en poids) :

63,2 à 63,45 % de $BaCO_3$

23,8 à 23,95 % de $TiO_2$

4,28 à 4,3 % de $CaCO_3$

7,91 à 7,94 % de $ZrO_2$

0,17 % de $Mn_3O_4$

0,075 à 0,151 % de $CuO$

0,051 % de $La_2O_3$

0,1156 % de $WO_3$

0,099 à 0,2 % de $CeO_2$.

Les résultats électriques sont exposés au tableau XIII placé en fin de description.

La stabilité dans le temps de ces compositions est conforme à celle des essais précédents.

EXEMPLE XIII

On réalise une solution solide par mélange des constituants suivants et synthèse thermique à 1150° C - 2 heures. $BaCO_3$ (63,456%); $TiO_2$ (23,96%); $ZrO_2$(7,94%); $CaCO_3$ (4,305%); $Mn_3O_4$ (0,172%) $La_2O_3$ - (0,051%); $WO_3$ (0,116%) ; proportions données en poids.

Les matières premières (3 kg) sont mélangées pendant 15 heures dans une jarre en porcelaine avec 7 kg de billes de zircone, 2 litres de solvant (par exemple du trichloréthylène) et 200 g de polymétacrylate de méthyle. La barbotine ainsi obtenue est coulée sur un support rigide et lisse, puis séchée, afin d'obtenir une feuille plastique de céramique. A l'aide d'une feuille de céramique, on réalise des condensateurs multicouches constitués d'un empilement alterné de couches diélectriques céramiques et d'électrodes métalliques. Ces dernières sont déposées sur les feuilles de céramique selon la technique bien connue de la sérigraphie. Elles sont constituées de nickel pur. Les condensateurs ainsi réalisés comportent 21 couches métallisées ayant des fonctions d'armatures.

Les couches de rangs pairs et les couches de rangs impairs étant respectivement reliées entre elles, après frittage par l'intermédiaire des terminaisons.

Les condensateurs sont frittés à une température comprise entre 1280°C et 1380°C en présence d'une atmosphère pauvre en oxygène (à 1350°C, $10^{-11}$<pression d'oxygène <$10^{-7}$ atm). Après dépôt des terminaisons en nickel et cuisson de celles-ci à basse température (<900°C) et sous atmosphère contrôlée, les condensateurs multicouches sont testés électriquement, et les résultats obtenus sont présentés au tableau XIV placé en fin de description.

Les résistances d'isolement Ri ne varient pas après un vieillissement accéléré effectué sous des champs électriques de 6,8 V/$\mu$ à 125°C pendant 1000 heures.

## EXEMPLE XIV

On réalise dans les mêmes conditions que précédemment des condensateurs multicouches par mélange des constituants suivants et synthèse thermique à 1150°C pendant deux heures. $BaCO_3$ - (63,456%); $TiO_2$ (23,96%); $ZrO_2$(7,94%); $CaCO_3$ (4,305%); $Mn_3O_4$ (0,172%); $Nd_2O_3$ (0,054 %); $WO_3$ (0,113 %) ; proportions données en poids.

Après frittage dans les conditions habituelles, les multicouches sont testés électriquement, et les résultats obtenus sont présentés au tableau XV placé en fin de description.

Les résistances d'isolement sont stables après essai de vieillissement sous champ (6,8 V/$\mu$) à 125°C.

## EXEMPLE XV

On réalise dans les mêmes conditions que précédemment des condensateurs multicouches, par mélange des constituants suivants et synthèse thermique à 1150°C pendant deux heures. $BaCO_3$ - (63,456%); $TiO_2$ (23,96%); $ZrO_2$(7,94%); $CaCO_3$ (4,305%); $Mn_3O_4$ (0,172%); $La_2O_3$ (0,06 %); $MoO_3$ (0,107 %) proportions données en poids.

Les résultats électriques sont présentés au tableau XVI placé en fin de description.

Les résistances d'isolement sont également stables après les essais de vieillissement.

Les nombreux essais effectués sur des compositions selon l'invention, et dont les exemples cités n'en représentent qu'une partie, montrent qu'il est judicieux que les rapports de stoechiométrie soient dans les limites suivantes :

$TiO_2$/BaO entre 0,91 et 0,97
$ZrO_2$/CaO entre 1,3 et 2,5
BaO/CaO entre 6 et 12
$TiO_2$/$ZrO_2$ entre 3 et 8
SrO/BaO entre 0 et 0,03.

## TABLEAU I

| Produits | 1 | 2 | 3 |
|---|---|---|---|
| $Mn_3O_4$ | 0,15 | 0 | 0 |
| $Cr_2O_3$ | 0 | 0,15 | 0 |
| $Co_3O_4$ | 0 | 0 | 0,15 |
| C(pF) à 20°C | 4750 | 3720 | 4770 |
| $\epsilon$ à 20°C | 9676 | 7276 | 9451 |
| $tg\delta(10^{-4})$ à 20°C | 78 | 170 | 148 |
| $\Delta C/C$ à +10°C | -1,6 | -19 | +0,3 |
| à +85°C | -59,1 | -44,5 | -60,5 |
| d $(g/cm^3)$ | 5,2 | 5,2 | 5,3 |
| Stabilité dans le temps (heures) | 18 | 13 | 0,15 |

## TABLEAU II

| Produits | 4 | 5 |
|---|---|---|
| % $Mn_3O_4$ (en poids) | 0,1712 | 0,171 |
| % $La_2O_3$ (en poids) | 0,0438 | 0,0515 |
| % $WO_3$ (en poids) | 0,1238 | 0,116 |
| C (pF) à 20°C | 6300 | 6440 |
| $tg\delta(10^{-4})$ à 20°C | 89 | 87 |
| $\epsilon$ à 20°C | 12815 | 13133 |
| $\Delta C/C$ (%) à +10°C | +4,3 | +3,7 |
| à 85°C | -64,2 | -63,4 |
| $tg\delta(10^{-4})$ à -55°C | 360 | 348 |
| d$(g/cm^3)$ | 5,2 | 5,1 |
| Stabilité dans le temps | >15 jours | >15 jours |

## TABLEAU III

| Produits | 6 | 7 |
|---|---|---|
| % $Mn_3O_4$ (en poids) | 0,172 | 0,172 |
| % $Nd_2O_3$ (en poids) | 0,039 | 0,054 |
| % $WO_3$ (en poids) | 0,128 | 0,113 |
| C (pF) à 20°C | 6620 | 6540 |
| $tg\delta(10^{-4})$ à 20°C | 95 | 91 |
| $\epsilon$ à 20°C | 13361 | 12765 |
| $\Delta C/C$ (%) à +10°C | +3,4 | +3,3 |
| à 85°C | -63,5 | -63,7 |
| $tg\delta(10^{-4})$ à -55°C | 368 | 363 |
| d$(g/cm^3)$ | 5,1 | 5,2 |
| Stabilité dans le temps | >15 jours | >15 jours |

TABLEAU IV

| Produits | 8 | 9 |
|---|---|---|
| % $Mn_3O_4$ (en poids) | 0,172 | 0,172 |
| % $La_2O_3$ (en poids) | 0,06 | 0,0806 |
| % $MoO_3$ (en poids) | 0,107 | 0,087 |
| C (pF) à 20°C | 8510 | 7390 |
| $tg\delta(10^{-4})$ à 20°C | 129 | 110 |
| $\epsilon$ à 20°C | 16614 | 14858 |
| $\Delta C/C$ (%) à + 10°C | +2,7 | +3,5 |
| à 85°C | -73,2 | -71,3 |
| $tg\delta(10^{-4})$ à -55°C | 460 | 414 |
| d ($g/cm^3$) | 5,3 | 5,2 |
| Stabilité dans le temps | >15 jours | >15 jours |

TABLEAU V

| Produits | 10 | 11 |
|---|---|---|
| % $Mn_3O_4$ (en poids) | 0,172 | 0,172 |
| % $MoO_3$ (en poids) | 0,1085 | 0,1443 |
| % ZnO (en poids) | 0,0585 | 0,023 |
| C (pF) à 20°C | 6950 | 7530 |
| $tg\delta(10^{-4})$ à 20°C | 96 | 126 |
| $\epsilon$ à 20°C | 13275 | 14614 |
| $\Delta C/C$ (%) à + 10°C | +4,2 | +3,6 |
| à 85°C | -70,4 | -71,6 |
| $tg\delta(10^{-4})$ à -55°C | 388 | 344 |
| d ($g/cm^3$) | 5,3 | 5,5 |
| Stabilité dans le temps | >15 jours | >15 jours |

TABLEAU VI

| Produits | 12 | 13 |
|---|---|---|
| % $Co_3O_4$ (en poids) | 0,151 | 0,3025 |
| % $CeO_2$ (en poids) | 0,2 | 0,2 |
| % $La_2O_3$ (en poids) | 0,0434 | 0,0445 |
| % $WO_3$ (en poids) | 0,1236 | 0,123 |
| C (pF) à 20°C | 2960 | 2990 |
| $tg\delta(10^{-4})$ à 20°C | 118 | 201 |
| $\epsilon$ à 20°C | 5612 | 5802 |
| $\Delta C/C$ (%) à + 10°C | -1,3 | -6,7 |
| à 85°C | -51,9 | -43,7 |
| $tg\delta(10^{-4})$ à -55°C | 115 | 317 |
| d ($g/cm^3$) | 4,7 | 5,1 |
| Stabilité dans le temps | >15 jours | >15 jours |

TABLEAU VII

| Produits | 14 | 15 |
|---|---|---|
| % $Cr_2O_3$ (en poids) | 0,152 | 0,152 |
| % $CeO_2$ (en poids) | 0,43 | 0,2 |
| % $La_2O_3$ (en poids) | 0,043 | 0,0514 |
| % $WO_3$ (en poids) | 0,123 | 0,1156 |
| C (pF) à 20°C | 3940 | 3630 |
| $tg\delta(10^{-4})$ à 20°C | 302 | 261 |
| $\epsilon$ à 20°C | 7386 | 6869 |
| $\Delta C/C$ (%) à + 10°C | -4,2 | -4,7 |
| à 85°C | -52,4 | -51 |
| $tg\delta(10^{-4})$ à -55°C | 341 | 290 |
| d (g/cm³) | 5,1 | 5,2 |
| Stabilité dans le temps | >15 jours | >15 jours |

TABLEAU VIII

| Produits | 16 | 17 | 18 |
|---|---|---|---|
| % $Mn_3O_4$ (en poids) | 0,172 | 0,172 | 0,172 |
| % $Nb_2O_5$ (en poids) | 0,128 | 0,1 | 0,04 |
| % $CeO_2$ (en poids) | 0,028 | 0,0862 | 0,156 |
| C (pF) à 20°C | 7180 | 6930 | 5570 |
| $tg\delta(10^{-4})$ à 20°C | 114 | 105 | 97 |
| $\epsilon$ à 20°C | 14234 | 13828 | 10823 |
| $\Delta C/C$ (%) à + 10°C | -3,7 | +0,9 | -2,7 |
| à +85°C | -61,1 | -66,3 | -59,7 |
| $tg\delta(10^{-4})$ à -55°C | 375 | 379 | 309 |
| d (g/cm³) | 5 | 5,1 | 4,9 |
| Stabilité dans le temps | supérieure à 15 jours | | |

TABLEAU IX

| Produits | 19 | 20 |
|---|---|---|
| % $Mn_3O_4$ (en poids) | 0,172 | 0,172 |
| % $Nb_2O_5$ (en poids) | 0,128 | 0,04 |
| % $Nd_2O_3$ (en poids) | 0,027 | 0,15 |
| C (pF) à 20°C | 7380 | 6210 |
| $tg\delta(10^{-4})$ à 20°C | 110 | 93 |
| $\epsilon$ à 20°C | 14850 | 12165 |
| $\Delta C/C$ (%) à + 10°C | -2,2 | +0,2 |
| à 85°C | -65,4 | -64,4 |
| $tg\delta(10^{-4})$ à -55°C | 401 | 327 |
| d (g/cm³) | 5 | 5,1 |
| Stabilité dans le temps | supérieure à 15 jours. | |

TABLEAU X

| Produits | 21 | 22 |
|---|---|---|
| % $Mn_3O_4$ (en poids) | 0,172 | 0,172 |
| % $Ta_2O_5$ (en poids) | 0,128 | 0,128 |
| % $ZnO$ (en poids) | 0, | 0,036 |
| % $La_2O_3$ (en poids) | 0,025 | 0 |
| C (pF) à 20°C | 6110 | 6340 |
| $tg\delta(10^{-4})$ à 20°C | 111 | 108 |
| $\epsilon$ à 20°C | 11826 | 12187 |
| $\Delta C/C$ (%) à + 10°C | -6,3 | -8,4 |
| à 85°C | -58,2 | -61 |
| $tg\delta(10^{-4})$ à -55°C | 324 | 332 |
| d (g/cm³) | 5,1 | 5,2 |
| Stabilité dans le temps | supérieure à 15 jours | |

TABLEAU XI

| Produits | 23 | 24 |
|---|---|---|
| % $Mn_3O_4$ (en poids) | 0,075 | 0,17 |
| % $Nd_2O_3$ (en poids) | 0,054 | 0,054 |
| % $WO_3$ (en poids) | 0,112 | 0,112 |
| C (pF) à 20°C | 6340 | 7650 |
| $tg\delta(10^{-4})$ à 20°C | 88 | 103 |
| $\epsilon$ à 20°C | 12174 | 14712 |
| $\Delta C/C$ (%) à + 10°C | +0 | -0,7 |
| à 85°C | -64,4 | -66,8 |
| $tg\delta(10^{-4})$ à -55°C | 312 | 379 |
| d (g/cm³) | 5,3 | 5, |
| Stabilité dans le temps | supérieure à 15 jours | |

TABLEAU XII

| Produit | 25 |
|---|---|
| C (pF) à 20°C | 5750 |
| $tg\delta(10^{-4})$ à 20°C | 54 |
| $\epsilon$ à 20°C | 11556 |
| $\Delta C/C$ (%) à + 10°C | +13,4 |
| à +85°C | -67,1 |
| $tg\delta(10^{-4})$ à -55°C | 444 |
| d (g/cm³) | 5,2 |
| Stabilité dans le temps | >15 jours |

EP 0 375 518 A1

## TABLEAU XIII

| Produits | 26 | 27 | 28 | 29 | 30 | 31 |
|---|---|---|---|---|---|---|
| %$CeO_2$ (en poids) | 0 | 0 | 0,099 | 0,099 | 0,2 | 0 |
| %$CuO$ (en poids) | 0,075 | 0,15 | 0,075 | 0,15 | 0,075 | 0,15 |
| C (pF) à 20°C | 5920 | 5230 | 5750 | 4130 | 5210 | 4110 |
| tg$\delta$($10^{-4}$) à 20°C | 79 | 87 | 84 | 87 | 90 | 79 |
| $\epsilon$ à 20°C | 11561 | 10762 | 11386 | 8141 | 10249 | 8210 |
| $\Delta$C/C (%) à +10°C | +4,9 | +1,5 | +6 | -4,2 | +6,1 | -1,6 |
| à +85°C | -64,3 | -60,4 | -64,8 | -51,7 | -63,8 | -54,2 |
| tg$\delta$($10^{-4}$) à -55°C | 329 | 308 | 376 | 255 | 384 | 295 |
| d (g/$cm^3$) | 5,6 | 5,4 | 5,6 | 5,1 | 5,1 | 5 |
| Stabilité dans le temps | supérieure à 15 jours | | | | | |

## TABLEAU XIV

| Produit | 32 |
|---|---|
| C (nF) à 20°C | 245 |
| tg$\delta$($10^{-4}$) à 20°C | 270 |
| $\epsilon$ à 20°C | 8500 |
| $\Delta$C/C (%) à +10°C | +12 |
| à +85°C | -61 |
| Ri (100V) en G$\Omega$ | 10 |

## TABLEAU XV

| Produit | 33 |
|---|---|
| C (nF) à 20°C | 177 |
| tg$\delta$($10^{-4}$) à 20°C | 90 |
| $\epsilon$ à 20°c | 8572 |
| $\Delta$C/C (%) à +10°C | +11 |
| à +85°C | -60 |
| Ri (100V) en G$\Omega$ | 10 |

## TABLEAU XVI

| Produit | 34 |
|---|---|
| C (nF) à 20°C | 245 |
| tg$\delta$($10^{-4}$) à 20°C | 170 |
| $\epsilon$ à 20°c | 8460 |
| $\Delta$C/C (%) à +10°C | +14 |
| à +85°C | -64 |
| Ri (100V) en G$\Omega$ | 10 |

## Revendications

1. - Composition céramique à haute permittivité, la composition étant à base de titanate de baryum, caractérisée en ce qu'elle est élaborée à partir d'un mélange comprenant en poids 59 à 67 % de carbonate de baryum, 22 à 26 % d'oxyde de titane, 2 à 6 % de carbonate de calcium, 0 à 1,1 % de carbonate de strontium, 3 à 12 % d'oxyde de zirconium, le mélange comprenant également entre 0,04 et 0,9 % en poids d'adjuvants, ces adjuvants comprenant au moins un composé choisi par les oxydes de cérium, de néodyme, de lanthane, de tungstène, de molybdène, de tantale et de niobium, et au moins un composé choisi parmi les oxydes de manganèse, de chrome, de cobalt, de zinc et de cuivre.

2 - Composition céramique selon la revendication 1, caractérisé en ce que la solution solide ainsi formée comporte un rapport molaire $TiO_2/BaO$ compris entre 0,91 et 0,97.

3 - Composition céramique selon l'une des revendications 1 ou 2, caractérisée en ce que la solution ainsi formée comporte un rapport molaire $ZrO_2/CaO$ compris entre 1,3 et 2,5.

4 - Composition céramique selon l'une quelconque des revendications 1 à 3, caractérisée en ce que la solution solide ainsi formée comporte un rapport molaire $BaO/CaO$ compris entre 6 et 12.

5 - Composition céramique selon l'une quelconque des revendications 1 à 4, caractérisée en ce que la solution solide ainsi formée comporte un rapport molaire $TiO_2/ZrO_2$ compris entre 3 et 8.

6 - Composition céramique selon l'une quelconque des revendications 1 à 5, caractérisée en ce que la solution solide ainsi formée comporte un rapport molaire $SrO/BaO$ compris entre 0 et 0,03.

7 - Composition céramique selon l'une quelconque des revendications 1 à 6, caractérisée en ce qu'elle comporte de 0,02 à 0,3 % en poids d'un oxyde choisi parmi la série suivante : oxyde de manganèse, de chrome, de cobalt.

8 - Composition céramique selon l'une quelconque des revendications 1 à 7, caractérisée en ce qu'elle comporte de 0,02 à 0,3 % en poids d'un oxyde choisi parmi la série suivante : oxyde de tungstène, de molybdène, de tantale, de niobium.

9 - Composition céramique selon l'une quelconque des revendications 1 à 8, caractérisée en ce qu'elle comporte de 0,02 à 0,3 % en poids d'un oxyde choisi parmi la série suivante : oxyde de néodyme, de lanthane.

10 - Composition céramique selon l'une quelconque des revendications 1 à 9, caractérisée en ce qu'elle comporte de 0,02 à 0,3 % en poids d'oxyde de cérium.

11 - Composition céramique selon l'une quelconque des revendications 1 à 10, caractérisée en ce qu'elle comporte de 0 à 0,5 % en poids d'un oxyde choisi parmi la série suivante : oxyde de zinc, oxyde de cuivre.

12 - Condensateur électrique comportant au moins une couche diélectrique et au moins deux électrodes, caractérisé en ce que la couche diélectrique est constituée par une composition selon l'une quelconque des revendications 1 à 11.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-4 468 472 (M. KASHIMA et al.) <br> * Revendications 1,2; exemples 1,6; colonne 2, lignes 52-63 * <br> --- | 1-5,7, 10,12 | C 04 B 35/49 <br> H 01 G 4/12 |
| A | DE-A-2 941 304 (K.K. SUWA SEIKOSHA) <br> * Revendications 1-3,7; pages 21,23; exemples * <br> --- | 1,7-12 | |
| A | DE-A-3 524 193 (MURATA MANUFACTURING CO., LTD) <br> * Revendications 1,2 * <br> --- | 1,7,11, 12 | |
| A | EP-A-0 076 011 (N.V. PHILIPS' GLOEILAMPENFABRIEKEN) <br> * Revendications 3,4; page 11 * <br> --- | 1,7 | |
| A | GB-A-2 027 010 (THOMSON-CSF) <br> * Revendication 1 * <br> --- | 1 | |
| A | WORLD PATENTS INDEX LATEST DATABASE, assession no. 84-303539, semaine 49, Derwent Publications Ltd, Londres, GB; & JP-A-59 188 902 (MURATA MANUFACTURING CO., LTD) 26-10-1984 <br> --- | 1 | |
| A | GB-A-2 161 472 (MURATA MANUFACTURING CO., LTD) <br> * Revendications 1,3,4 * <br> --- | 1 | |
| A | DE-A-3 807 923 (MURATA MANUFACTURING CO., LTD) <br> * Page 4, exemple * <br> ----- | 1 | |

**DOMAINES TECHNIQUES RECHERCHES (Int. Cl.5)**

C 04 B 35/46
C 04 B 35/49
H 01 B 1/08
H 01 G 4/12

Le présent rapport a été établi pour toutes les revendications

| Lieu de la recherche | Date d'achèvement de la recherche | Examinateur |
|---|---|---|
| LA HAYE | 28-03-1990 | STROUD J.G. |